# EUROPÄISCHE PATENTSCHRIFT

(11) **EP 1 658 470 B1**
(45) Veröffentlichungstag und Bekanntmachung des Hinweises auf die Patenterteilung: **02.09.2009**
(21) Anmeldenummer: 04738741.0
(22) Anmeldetag: 19.06.2004
(51) Int. Cl.: G01B 11/24, G01B 11/30, G01B 11/02, G01B 9/02, G02B 23/24

(54) **OPTISCHES MESSSYSTEM ZUM ERFASSEN VON GEOMETRIEDATEN VON OBERFLÄCHEN**
OPTICAL MEASURING SYSTEM FOR RECORDING THE GEOMETRICAL DATA OF SURFACES
SYSTEME DE MESURE OPTIQUE POUR DETECTER DES DONNEES GEOMETRIQUES RELATIVES A DES SURFACES

(30) Priorität: 18.08.2003 DE 10337894
(43) Veröffentlichungstag der Anmeldung: 24.05.2006
(73) Patentinhaber: ROBERT BOSCH GMBH, 70442 Stuttgart (DE)
(72) Erfinder: LINDNER, Michael, 71397 Leutenbach (DE); SCHMIDTKE, Bernd, 70839 Gerlingen (DE)
(86) Internationale Anmeldenummer: PCT/DE2004/001292
(87) Internationale Veröffentlichungsnummer: WO 2005/019768

(56) Entgegenhaltungen:
- DE-A- 19 819 762
- US-A- 5 106 192
- ZHAO Y ET AL: "Single-mode fiber-based reflex sensor for internal surface in-line measurement of small products" SENSORS AND ACTUATORS A, ELSEVIER SEQUOIA S.A., LAUSANNE, CH, Bd. 101, Nr. 1-2, 30. September 2002 (2002-09-30), Seiten 30-36, XP004380147 ISSN: 0924-4247

## Beschreibung

Die Erfindung bezieht sich auf ein optisches Messsystem zum Erfassen von Geometriedaten von Oberflächen mindestens eines Objekts mit einem Strahlzuführungsabschnitt, mit einer an diese angeschlossenen Sondenanordnung, die mehrere Sondenausgänge zum Abgeben eines jeweiligen Messstrahls auf eine zugeordnete Oberflächenstelle und Aufnehmen von der Oberfläche zurückgeworfener Strahlung aufweist, und mit einer nachgeordneten Auswerteeinrichtung zum Bestimmen der Geometriedaten auf der Grundlage der von den Oberflächenstellen zurückgeworfenen Strahlung.

### Stand der Technik

Ein derartiges optisches Messsystem ist in der DE 198 08 273 A1 angegeben. Bei diesem bekannten Messsystem, das als wesentlichen Teil ein faseroptisches kurzkohärentes Mehr-Wellenlängen-Heterodyn-Infierferometer aufweist, sind an einen Strahlzuführungsabschnitt, der eine kurzkohärente, breitbandige Lichtquelle und ein deren Licht aufnehmendes Modulations-Interferometer aufweist, eine auf die Objektoberfläche auszurichtende Messsonde und eine auf einen Messtisch, auf dem das Bauteil mit der Oberfläche gelagert ist, auszurichtende Bezugssonde angeschlossen. Mit dieser Sondenanordnung aus Messsonde und Bezugssonde sind zwar Lagebeziehungen und Änderungen zwischen der Objektoberfläche und der Lagervorrichtung erfassbar und können während der Oberflächen-Messvorgänge berücksichtigt werden, um aus solchen Lageabweichungen resultierende Messfehler zu reduzieren bzw. auszuschließen. Auf die Vermessung der Oberflächengeometrie eines Bauteils oder mehrerer in fester Lagebeziehung zueinander stehender Bauteile, wie z.B. Abstand oder Rauhigkeit oder Rundheit, können sich jedoch noch weitere relative örtliche Änderungen zwischen den Ausgängen der Sondenanordnung und den Oberflächenstellen auswirken, wie z.B. Ungenauigkeiten in der Sondenführung oder Relativbewegungen zwischen Sonde und Bauteil in verschiedenen Freiheitsgraden während des Messvorganges. Derartige Einflussgrößen auf die Messvorgänge sind schwer auszuschließen, insbesondere bei fertigungsprozessnahen Form- bzw. Abstandsvermessungen.

Zur robusten fertigungsprozessnahen Form- und Abstands- bzw. Durchmesservermessung von z.B. Führungsbohrungen werden heute vorwiegend pneumatische -Messverfahren eingesetzt. Die Präzision dieser Verfahren ist jedoch technisch begrenzt und erhöhten Toleranzanforderungen in Zukunft wohl nicht mehr gewachsen. Für eine hochpräzise Vermessung werden hingegen hoch auflösende Messverfahren im nm-Bereich benötigt, die derzeit nur in schwingungsisolierten Feinmessräumen installiert werden können.

Für die hoch aufgelöste Form- und Durchmesserbestimmung an Führungsbohrungen werden vorwiegend punktförmige Abstandssensoren eingesetzt, deren Messköpfe den Abstand der Bauteiloberfläche zu einem Referenzpunkt sehr genau bestimmen können. Solche punktförmigen Abstandssensoren müssen für die Vermessung der Bauteilform grundsätzlich mit einer Formmessmaschine kombiniert werden, die den Sensor mechanisch entlang einer definierten Bahn über die abzutastende Oberfläche des Bauteils führt. Die Genauigkeit solcher Messverfahren beruht wesentlich auf der Führungsgenauigkeit und der mechanischen Stabilität der Formmessmaschinen.

Bei den punktförmigen Abstandssensoren setzen sich derzeit aufgrund des berührungslosen Messprinzips und den sich daraus ergebenden Vorteilen immer mehr optische, insbesondere interferometrisch arbeitende Sensoren gegenüber taktilen Tastern durch. Unter den interferometrisch arbeitenden Sensoren ist insbesondere das vorstehend genannte Mehrwellenlängen-Heterodyn-Interferometer mit kurzkohärenter Lichtquelle ein bereits industriell erprobtes, punktförmiges und schnelles Messverfahren, das in der Lage ist, rauhe technische Oberflächen zu vermessen. Bekannt bei optischen Messsystemen sind aber auch beispielsweise konfokale Messverfahren.

Bei dem Sensor nach der Y.Zhao, Y.Liao, "Single-mode fiber-based reflex sensor for internal surface in-line measurement of small products", Sensors and Actuators A 101 (2002) 30-36; XP4380147 sind zwei Sondenausgänge mit einem Abstand von 180° vorhanden. Das Messergebnis ist somit abhängig von der Sondenposition in der zu messenden Bohrung und somit weiterhin von Messfehlern behaftet. Beim Messelement nach der DE 19819 762 sind das Modulationsinterferometer und die Messsonde räumlich getrennt. Die beiden Strahlen, d.h. der Referenzstrahl und der Messstrahl sind für die eigentliche Messung getrennt notwendig und nicht zur Position der Sonde verwendbar. Mit der Vorrichtung nach der US 51 06 192 wird die Position eines Objektes zu einer Wand hin bestimmt und nicht die Form des Objekts.

Der Erfindung liegt die Aufgabe zugrunde, ein optisches Messsystem der eingangs genannten Art bereit zu stellen, das insbesondere auch bei einer fertigungsprozessnahen Erfassung von Oberflächen-Geometriedaten verfälschende Einflüsse von Lageänderungen zwischen der Messsondenanordnung und den Oberflächenstellen möglichst weitgehend und mit möglichst einfachen Maßnahmen ausschließt.

### Vorteile der Erfindung

Diese Aufgabe wird mit den Merkmalen des Anspruches 1 gelöst. Hierbei ist vorgesehen, dass die Sondenanordnung mit den Sondenausgängen in der Weise ausgebildet ist, dass außer den Geometriedaten der Oberfläche(n) gleichzeitig auch die relative Lage der Sondenanordnung mit den in fester Lagebeziehung zueinander positionierten Sondenausgängen zu dem/den Objekt/en zumindest hinsichtlich mehrerer relevanter Freiheitsgrade bestimmbar ist.

Mit diesem Aufbau der Sondenanordnung können insbesondere auch während eines Fertigungsprozesses auftretende Lageänderungen zwischen den Sondenausgängen und den Oberflächenstellen festgestellt und bei der Ermittlung der Geometriedaten herausgerechnet werden. Aufwändige Führungselemente für die Sondenführung oder aufwändige Schwingungsisolierungen sind nicht erforderlich. Dabei ergibt sich eine hochpräzise, mechanisch robuste Messung der relevanten Formkenngrößen des Bauteils.

Beispielsweise kann eine Bohrung oder ein Hohlraum mit parallelen Wandflächen zuverlässig vermessen werden. Gemäss der Erfindung sind mehrere Sondenausgänge in mindestens zwei bezüglich einer Achse der Sondenanordnung voneinander beabstandeten, normalen Messebenen positioniert. Dadurch kann beispielsweise ein Verkippen zwischen einer Führungsachse der Sondenanordnung und einer Hohlraumachse erkannt bzw. kompensiert werden.

Gemäss der Erfindung sind mindestens drei Sondenausgänge in einer Messebene angeordnet und mindestens ein Sondenausgang ist in einer weiteren Messebene angeordnet.

Für die Messung und Erkennung von Bezugsstellen sind weiterhin die Maßnahmen vorteilhaft, dass die Sondenausgänge in den Messebenen asymmetrisch verteilt sind.

Des Weiteren ist eine solche Anordnung unter Nutzung zweier Messebenen insbesondere für die Vermessung von Führungsbohrungen ideal, da die Messgeometrie in diesem Fall an die Funktion des Bauteils angepasst ist.

Dabei besteht eine für die Vermessung von Bohrungen vorteilhafte Anordnung darin, dass mindestens drei Sondenausgänge in einer Messebene angeordnet und mindestens zwei Sondenausgänge in einer weiteren Messebene angeordnet sind.

Für die komplette Vermessung der Form einer Bohrung sind weiterhin die Maßnahmen vorteilhaft, dass die mindestens drei Sondenausgänge in einer Messebene in asymmetrischer Teilung angeordnet sind.

Ein einfacher Aufbau, der auch für eine Messung in engen Hohlräumen geeignet ist, ergibt sich dadurch, dass in Richtung der Achse der Sondenanordnung übereinander liegende Sondenausgänge zu einer Sondeneinheit zusammengefasst sind, die über eine Lichtleitfaser und eine Anschlussstelle an den Strahlzuführungsabschnitt angeschlossen ist.

Eine vorteilhafte Ausbildung für Präzisionsmessungen der Oberflächengeometrie besteht darin, dass das Messsystem eine interferometrische Messvorrichtung aufweist.

Eine für die Handhabung günstige Ausgestaltung wird dabei durch die Maßnahmen erreicht, dass die interferometrische Messvorrichtung als Weißlichtinterferometer und/oder ein Heterodyn-Interferometer ausgebildet ist.

Eine für den Aufbau und die Bedienung günstige Ausbildung besteht darin, dass der Strahlzuführungsabschnitt eine breitbandige, kurzkohärente Lichterzeugungseinheit und ein Modulationsinterferometer aufweist, das mehrere unterschiedliche optische Weglängen und akustooptische Modulatoren enthaltende Interferometerarme besitzt und dass die Sondenanordnung einem Messinterferometer zugeordnet ist, in dem in dem Modulätionsinterferometer aufgeprägte optische Weglängenunterschiede, die größer sind als die Kohärenzlänge des kurzkohärenten Lichts, aufgehoben werden.

Ist vorgesehen, dass die Auswerteeinrichtung zum parallelen Erfassen und Auswerten der über die Sondenausgänge und diesen zugeordnete Messkanäle von ihr empfangenen, von den Oberflächenstellen zurückgeworfenen Strahlung ausgebildet ist, ergeben sich praktisch keine Verzögerungen in der Istzeit.

Aufgrund der hohen Messrate der Heterodyn-Technik lassen sich darüber hinaus Stör-Schwingungen bis zu sehr hohen Grenzfrequenzen 1 /ΔT unterdrücken. Eine parallele Erfassung und Auswertung der Messkanäle ermöglicht die vollständige Ausnutzung dieser hohen Grenzfrequenz unabhängig von der Zahl der Kanäle.

Verschiedene vorteilhafte Ausgestaltungen miteinem Weißlicht-Heterodyn-Interferometer in Verbindung mit mehreren Messkanälen bestehen darin, dass in dem Modulationsinterferometer zum Erzeugen unterschiedlicher Kombinationen von optischen Wegdifferenzen und Frequenzverschiebungen für unterschiedliche Heterodynfrequenzen mehr als zwei Interferometerarme oder in den Interferometerarmen ausgebildete Rückkopplungsschleifen vorhanden sind.

Die genannten Maßnahmen lassen bei entsprechender Ausgestaltung z.B. die gleichzeitige Bestimmung aller Freiheitsgrade eines Idealzylinders innerhalb eines Messvorganges mit sehr kurzer Messzeit zu. Dies wird u.a. über die Anordnung der Sondenausgänge in der Weise erreicht, dass die am Bauteil zu vermessende Oberfläche selbst als Referenz für die Bestimmung der Geometriedaten bzw. Messgrößen dient.

Aus der Kenntnis der Freiheitsgrade sowie der groben Kenntnis der Lateral-Koordinaten der Positionierungsmechanik kann die Form des Bauteils entkoppelt von den Lagekoordinaten der Sondenanordnung bzw. Sondenausgänge zum Bauteil ermittelt werden. Die Genauigkeit wird bei diesem Messprinzip im Wesentlichen durch die Eigenschaften der Sondenanordnung selbst bestimmt, die in sich stabil und präzise gebaut werden kann. Dadurch wird zum einen von vornherein eine Erkennung und gegebenenfalls Kompensation mechanischer Schwingungen erreicht, wodurch die Integration hoch präziser optischer Feinmesstechnik in mechanisch unstabilisierte Umgebungen ermöglicht wird. Zum anderen kann auf eine hohe Präzision von Führungsachsen einer Formmessmaschine verzichtet werden, woraus eine erhebliche Kosteneinsparung resultiert.

Zu einer genauen Vermessung der Oberfläche tragen die Maßnahmen bei, dass eine Führungsvorrichtung zum relativen Verstellen des Objekts bezüglich der Sondenanordnung vorhanden ist, mit eine Relativverstellung in z-Richtung und/oder durch Rotation durchführbar ist. Hierbei ist bei rotationssymmetrischen Hohlraumoberflächen die Rotationsverstellung von besonderer Bedeutung, weil durch eine geeignete mathematische Auswertung das Formprofil mechanisch robust und hochpräzise ermittelbar ist, insbesondere auch Durchmesser und Rundheit. Druch die zusätzliche z-Verschiebung ergibt sich eine Auswertung der gesamten Zylinderform.

Zeichnung Die Erfindung wird nachfolgend anhand von Ausführungsbeispielen unter Bezugnahme auf die Zeichnungen näher erläutert. Es zeigen:
- Fig. 1: ein Ausführungsbeispiel einer Sondenanordnung bezüglich eines Bauteils in schematischer perspektivischer seitlicher Ansicht und in einer Querschnittsansicht,
- Fig. 2: einen Teil der Sondenanordnung mit einem Strahlengang in seitlicher schematischer Ansicht,
- Fig. 3: eine schematische Darstellung mehrerer mit der Sondenanordnung nach Fig. 1 erhaltener Messkanäle in Ankopplung an eine Auswerteeinrichtung und
- Fig. 4: einen Strahlzuführungsabschnitt des optischen Messsystems mit einem Modulations-Interferometer.

### Ausführungsbeispiel

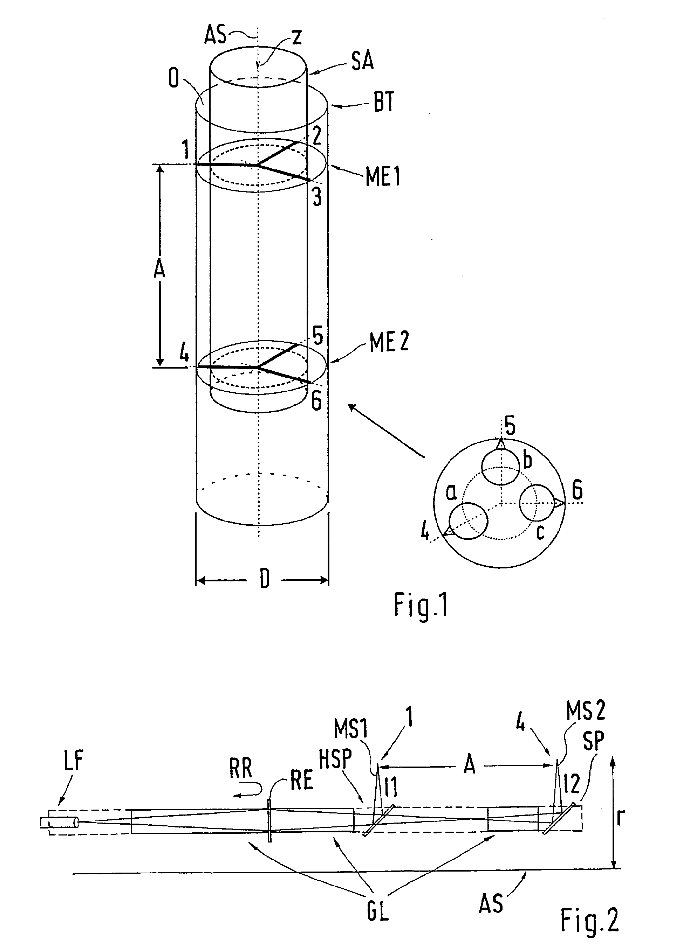

Ein in Fig. 1 gezeigter Abschnitt einer Sondenanordnung SA des optischen Messsystems ist in einen zylindrischen Hohlraum eines Bauteils BT zum Erfassen mehrerer Stellen der den Hohlraum umgebenden Oberfläche O eingeführt und in dem zylindrischen Hohlraum entlang einer Führungsachse einer nicht gezeigten Führungsvorrichtung in z-Richtung und/oder rotierend verstellbar, wobei eine Sondenachse AS im Wesentlichen mit der Führungsachse und auch einer Hohlraumachse übereinstimmen oder zumindest parallel zu dieser verlaufen soll.

Dieser Idealfall ist aber in der Realität insbesondere bei einem Fertigungsprozess schwer erreichbar.

Die Sondenanordnung SA besitzt mehrere Sondenausgänge 1, 2, 3, 4, 5, 6; von denen jeweils drei in zwei in z-Richtung um einen Abstand A voneinander beabstandeten, bezüglich der Sondenachse AS normalen Messebenen ME1, ME2 angeordnet sind, wie auch in der Querschnittsdarstellung der Ebene ME2 gezeigt ist. Der zylindrische Hohlraum besitzt einen Durchmesser D. Zwei in z-Richtung übereinander angeordnete Sondenausgänge 1, 4; 2, 5; 3, 6 sind jeweils zu einer Sondeneinheit a, b, c in Form einer Doppelsonde zusammengefasst.

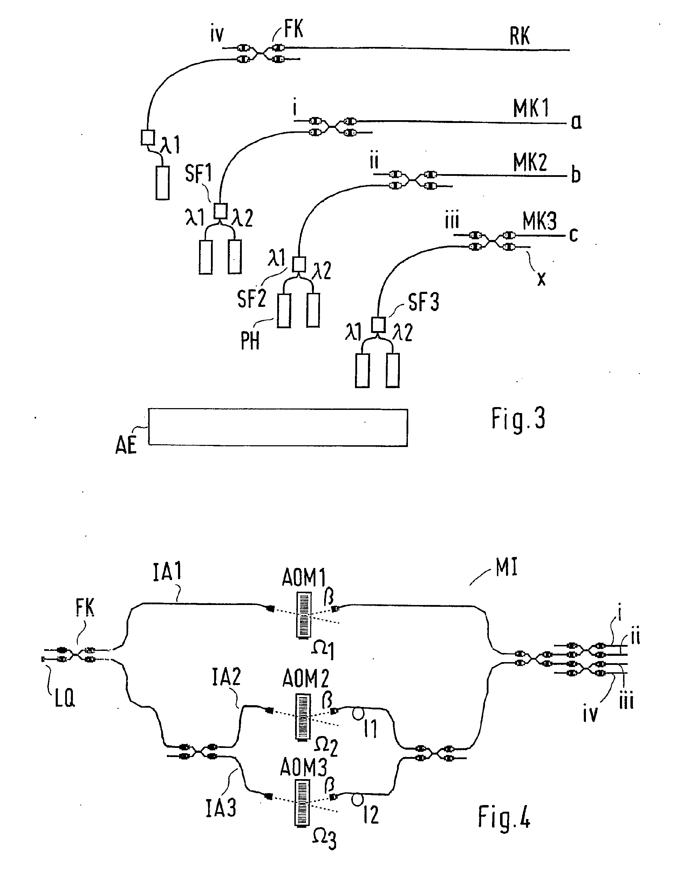

Fig. 2 zeigt eine derartige Doppelsonde a, b, c relativ zu der Sondenachse AS und mit zu zwei um den Abstand A in z-Richtung voneinander beabstandeten Oberflächenstellen führenden Messstrahlen MS.1, MS2. Dabei wird der erste Messstrahl MS1 mittels eines halbdurchlässigen Spiegels HSP über den betreffenden Sondenausgang 1 zu der entsprechenden Oberflächenstelle geführt, während der zweite Messstrahl MS2 durch den halbdurchlässigen Spiegel HSP und eine sogenannte Grin-Linse GL zu einem Spiegel SP verläuft und von dort über einen entsprechenden weiteren Sondenausgang 4 auf die entsprechende Oberflächenstelle geführt wird, so dass z.B. der Nennradius r des zylindrischen Hohlraums bzw. dessen Gleichmäßigkeit bestimmt werden kann. Die Doppelsonde a, b, c ist dabei Teil eines Messinterferometers mit einer Referenzfläche RE, an dem ein Referenzreflex RR gebildet wird. Das in die Doppelsonde geführte und von dieser wieder zurückgeführte Licht mit dem Referenzreflex RR und der von den Oberflächenstellen zurückgeworfenen Strahlung wird über eine den Doppelsonden a, b, c zugeordnete jeweilige monomode Lichtleitfaser LF geführt. Die optische Weglänge des ersten Messstrahls MS1 zwischen der Referenzfläche RE und der betreffenden Oberflächenstelle beträgt 11, während die optische Weglänge des zweiten Messstrahls MS2 zwischen der Referenzfläche RE und der betreffenden Oberflächenstelle 12 beträgt. Diese optischen Weglängen 11, 12 entsprechen einer jeweiligen optischen Weglänge, die den betreffenden Lichtstrahlen in einem in Fig. 4 gezeigten Modulations-Interferometer MI in einem Strahlzuführungsabschnitt des optischen Messsystems aufgeprägt worden sind.

Wie Fig. 3 zeigt, gelangt das über die Doppelsonden a, b, c zurückgeführte Licht über zugeordnete Messkanäle MK1, MK2, MK3 und Faserkoppler FK sowie über Empfängereinheiten mit einem jeweiligen spektralen Filter SF1, SF2, SF3 zum Herausfiltern individueller Wellenlängen λ₁, λ₂ auf jeweilige Photoempfänger PH und wird dort in elektrische Signale umgewandelt, die in der Auswerteeinrichtung AE aufgenommen und ausgewertet werden, um daraus die Geometriedaten der Oberfläche(n) zu berechnen. Außerdem kann für weitere Auswertemaßnahmen noch ein Referenzkanal RK angeschlossen sein. Die Messkanäle MK1, MK2, MK3 sowie der Referenzkanal RK sind über jeweilige Anschlussstellen i, ii, iii, iv der Faserkoppler FK und entsprechende Lichtleitfasern LF an den Ausgang des Modulations-Interferometers MI bzw. Mixers angeschlossen. Vorliegend ist ein freier Zweig x der als X-Einheit ausgebildeten Faserkoppler FK ungenutzt, da lediglich eine Y-Anordnung benötigt wird.

Wie Fig. 4 zeigt, wird das Modulations-Interferometer MI eingangsseitig von einer Lichterzeugungseinheit bzw. Lichtquelle LQ gespeist, die kurzkohärentes, breitbandiges Licht erzeugt, aus dessen Spektrum die beiden Wellenlängen λ₁ und λ₂ mit definierten Bandbreiten ausselektriert werden. In dem Modulations-Interferometer MI sind drei Interferometerarme IA1, IA2, IA3 gebildet, in denen unterschiedliche optische Weglängen L1, L2 sowie jeweilige akustooptische Modulatoren AOM1, AOM2, AOM3 zum Erzeugen entsprechender Frequenzverschiebungen Ω₁, Ω₁, Ω₃ für die Heterodyn-Frequenzen des Heterodyn-Verfahrens angeordnet sind. Die akusto-optischen Modulatoren AOM1, AOM2, AOM3 sind beispielsweise als Bragg-Zellen ausgebildet und lenken das Licht unter betreffenden Auskoppelwinkeln β in zugewandte Lichtleitfaserabschnitte. Durch die unterschiedlichen optischen Weglängen I1, 12 werden unterschiedliche optische Wegdifferenzen erzeugt, die größer sind als die durch die Spektralfilter SF1 - SF4 definierte Kohärenzlänge, so dass das aus dem Modulations-Interferometer MI austretende Licht bzw. die austretende Strahlung nicht interferiert. Durch das Aufheben dieser optische Wegunterschiede in dem genannten Mess-Interferometer mit der Sondenanordnung SA interferiert die von den betreffenden Oberflächenstellen zurückgeworfene Strahlung jedoch mit dem Licht des Referenzreflexes RR, so dass die entsprechenden Phaseninformationen in der Auswerteeinrichtung in an sich bekannter Weise zum Bestimmen der Oberflächen-Geometriedaten herangezogen werden können. Die Trennung in Modulations-Interferometer MI und Sondenanordnung SA bzw. Messinterferometer ergibt einen günstigen Aufbau mit einfach handhabbarer Sondenanordnung SA, wie in der eingangs genannten Druckschrift DE 198 08 273 A1 mit weiteren Nachweisen erläutert.

Bei dem beschriebenen Ausführungsbeispiel wird z.B. die Form der zylindrischen Führungsbohrung durch die Sondenanordnung SA erfasst, die in die Bohrung eingeführt wird. Das Bauteil BT (oder die Sondenanordnung SA) wird mittels einer (nicht gezeigten) einfachen mechanischen Führungseinrichtung zum einen um eine Rotationsachse gedreht und zum anderen linear entlang der Bohrungsachse in z-Richtung verschoben. Die Führungsachsen der mechanischen Bewegungen müssen dabei weder untereinander noch mit der Bohrungsachse des Bauteils BT exakt übereinstimmen.

Die Sondenausgänge 1, 2, 3, 4, 5, 6 sind in den zwei Messebenen ME1, ME2 so angeordnet, dass alle fünf für die Vermessung eines Idealzylinders relevanten Freiheitsgrade bestimmt werden können. Diese sind im Einzelnen die vier Koordinaten, welche die Lage der Zylinderachse im Bezug zur Sondenachse AS eindeutig festlegen (zwei laterale Ablagekoordinaten und zwei Kippwinkel, sowie ein verbleibender Freiheitsgrad für den Durchmesser des Idealzylinders).

Eine Anordnung mit in beiden Messebenen identischer Teilung hat den weiteren Vorteil der Austauschbarkeit beider Messebenen. Dies ist insbesondere für die Vermessung von Führungsbohrungen von Bedeutung.

Die Teilung der drei Sondenausgänge 1, 2, 3 bzw. 4, 5, 6 in den beiden Messebenen ME1, ME2 gemäß Fig. 1 ist vorzugsweise asymmetrisch. Die Integration jeweils zweier übereinander liegender Ausgänge in den drei Doppelsonden a, b, c hat den Vorteil der Platzersparnis insbesondere bei Sondenanordnungen SA für Bohrungen kleinen Durchmessers.

Die Erfassung der Abstände aller sechs, den Sondenausgängen, 1, 2, 3, 4, 5, 6 zugeordneten Messkanäle erfolgt vorzugsweise parallel, d.h. gleichzeitig bei hoher Messrate. Das gezeigte optische Messsystem mit dem 2λ-Weißlicht-Heterodyn-Interferometer ist dafür vorzugsweise auf drei parallele Doppel-Empfänger mit jeweils zwei Photoempfängern PH für die Wellenlängen λ₁ und λ₂ zuzüglich eines Empfängers für den optionalen Referenzkanal RK ausgebildet, wie in Fig. 3 gezeigt. Jeder Doppel-Empfänger empfängt die von beiden Ausgängen einer jeweiligen Doppelsonde a, b, c überlagerten Signale der jeweiligen Strahlung. Die Trennung der Abstandsinformation einer Doppel-Sonde erfolgt durch die Verwendung zweier Heterodyn-Frequenzen Ω₁, Ω₂, die bei der Signalanalyse spektral getrennt werden. Entsprechend Fig. 4 ist das Modulations-Interferometer MI für dieses Konzept mit einem dritten Interferometerarm IA3 ergänzt, in dem ein dritter akustooptischer Modulator AOM3 angeordnet ist. Die genannten optischen Wegunterschiede in den Interferometerarmen IA1, IA2, IA3 sind den Wegunterschieden in der Doppel-Sonde angepasst. Ähnlich können die-erforderlichen optischen Wegunterschiede und Heterodyn-Frequenzen auch z.B. über nur zwei Interferometerarme gebildet werden, in denen Rückkopplungsschleifen angeordnet sind, so dass die optischen Weglängen und entsprechenden akustooptischen Modulatoren wiederholt durchlaufen werden.

Eine Anordnung von mindestens fünf Messkanälen erlaubt die unabhängige Bestimmung von insgesamt fünf Freiheitsgraden innerhalb eines durch das Messsystem gegebenen Zeitintervalls ΔT. Die derart ausgelegte Mehrfach-Sonde kann mit einer einfachen Positionierungsmechanik derart an der Bauteiloberfläche entlang geführt werden, dass die zu vermessende Fläche sukzessive abgefahren wird. Es ergibt sich daraus ein Gesamt-Datensatz, aus dem sich die komplette Form der Oberfläche mechanisch robust, d.h. unabhängig von äußeren mechanischen Einflüssen, bestimmen lässt. Dabei ist für die mechanische Robustheit ausschließlich diejenige Messzeit ΔT maßgeblich, innerhalb der die fünf Freiheitsgrade erfasst werden. Es können damit Schwingungen und Lageänderungen bis zu einer Grenzfrequenz von 1/ΔT unterdrückt werden.

Eine derartige mechanische Führung durch eine Positionierungsmechanik kann beispielsweise durch Rotation des Bauteils um eine Drehachse und die gleichzeitige Verschiebung der Sonde entlang der Z-Achse erfolgen. Diese mechanischen Bewegungen können dabei in weiten Grenzen unpräzise erfolgen. Des Weiteren müssen die Führungsachsen weder untereinander, noch mit der Bauteilachse exakt übereinstimmen.

Die Verwendung von weniger als fünf Messkanälen ist unter Umständen sinnvoll, falls bestimmte Freiheitsgrade z.B. durch die Positioniermechanik ausreichend stabil gehalten werden können. Beispielsweise kann man auf die beiden Kanäle in der zweiten Messebene verzichten, wenn der Verkippungswinkel der Sondenachse zur Bauteilachse anderweitig stabilisiert wird.

## Patentansprüche

1. Optisches Interferometermessystem zum Erfassen von Geometriedaten von Oberflächen (0) mindestens eines Objekts (BT), mit einem Strahlzuführungsabschnitt, mit einer an diesem angeschlossenen Sondenanordnung (SA), die mehrere Sondenausgänge (1,2,3,4,5,6) zum Abgeben eines jeweiligen Messstrahls (MS1, MS2) auf eine zugeordnete Oberflächenstelle und Aufnehmen von der Oberflächenstelle zurückgeworfener Strahlung aufweist, und mit einer nachgeordneten Auswerteeinrichtung (AE) zum Bestimmen der Geometriedaten auf der Grundlage der von den Oberflächenstellen zurückgeworfenen Strahlung wobei die Sondenanordnung (SA) mit den Sondenausgängen (1,2,3,4,5,6) in der Weise ausgebildet ist, dass außer den Geometriedaten der Oberflächen gleichzeitig auch die relative Lage der Sondenanordnung (SA) mit den in fester Lagebeziehun zueinander positionierten Sondenausgängen (1,2,3,4,5,6) zu dem mindestens einen Objekt zumindest hinsichtlich mehrerer relevanter Freiheitsgrade bestimmbar ist und wobei das Interferometersystem zur Bestimmung dieser relativen Lage ausgebildet ist, wobei ; mehrere Sondenausgänge (1,2,3,4,5,6) in mindestens zwei bezüglich einer Achse (AS) der Sondenanordnung (SA) voneinander beabstandeten, normalen Messebenen (ME1, ME2) positioniert sind und dass mindestens drei Sondenausgänge (1, 2, 3) in einer Messebene (ME1) angeordnet und mindestens ein Sondenausgang ( 4, 5, 6) in einer weiteren Messebene (BE2) angeordnet sind.

2. Messsystem nach Anspruch 1, **dadurch gekennzeichnet, dass** die Sondenausgänge (1, 2, 3, 4, 5, 6) in mindestens einer Messebene (ME21, ME2) asymmetrisch verteilt sind.

3. Messsystem nach einem der Ansprüche 1 oder 2, **dadurch gekennzeichnet,**
**dass** in Richtung (z) einer Achse (AS) der Sondenanordnung (SA) übereinander liegende Sondenausgänge (1, 4) zu einer Sondeneinheit (a, b, c) zusammengefasst sind, die über eine Lichtleitfaser (LF) und eine Anschlussstelle (i, ii, iii) an den Strahlzuführungsabschnitt angeschlossen ist.

4. Messsystem nach einem der vorhergehenden Ansprüche, **dadurch**
**gekennzeichnet, dass** es eine interferometrische Messvorrichtung aufweist.
und wobei das Interferometersystem zur Bestimmung dieser relativen Lage ausgebildet ist, wobei ;

5. Messsystem nach Anspruch 4, **dadurch gekennzeichnet, dass** die interferometrische Messvorrichtung als Weißlichtinterferometer und/oder Heterodyn-Interferometer ausgebildet ist.

6. Messsystem nach einem der vorhergehenden Ansprüche, **dadurch gekennzeichnet, dass** die Auswerteeinrichtung (AE) zum parallelen Erfassen und Auswerten der über die Sondenausgänge (1,2,3,4,5,6) und diesen zugeordnete Messkanäle (MK1, MK2, MK3) von ihr empfangenen, von den Oberflächenstellen zurückgeworfenen Strahlung ausgebildet ist.

7. Messsystem nach Anspruch 6, **dadurch gekennzeichnet, dass** der Strahlzuführungsabschnitt eine breitbandige, kurzkohärente Lichterzeugungseinheit (LQ) und ein Modulationsinterferometer (MI) aufweist, das mehrere unterschiedliche optische Weglängen (11, 12) und akustooptische Modulatoren (AOM1, AOM2, AOM3) enthaltende Interferometerarme (IA1, IA2) besitzt und dass die Sondenänordnung (SA) einem Messinterferometer zugeordnet ist, in dem in dem Modulationsinterferometer (MI) aufgeprägte optische Weglängenunterschiede, die größer sind als die Kohärenzlänge des kurzkohärenten Lichts, aufgehoben werden.

8. Messsystem nach Anspruch 7, **dadurch gekennzeichnet, dass** in dem Modulationsinterferometer (MI) zum Erzeugen unterschiedliche Kombinationen von optischen Wegdifferenzen und Frequenzverschiebungen für unterschiedliche Heterodynfrequenzen mehr als zwei Interferometerarme (IA1, IA2, IA3) oder in den Interferometerarmen ausgebildete Rückkopplungsschleifen vorhanden sind.

9. Messsystem nach einem der vorhergehenden Ansprüche, **dadurch gekennzeichnet, dass** eine Führungsvorrichtung zum relativen Verstellen des Objektes (BT) bezüglich der Sondenanordnung (SA) vorhanden ist, mit der eine Relativverstellung in Richtung der Achse (AS) und/oder durch Rotation durchführbar ist.

## Claims

1. Optical interferometric measurement system for recording geometrical data of surfaces (0) of at least one object (BT), having a beam feed section, comprising a probe arrangement (SA) which is connected thereto and has a plurality of probe outputs (1, 2, 3, 4, 5, 6) for emitting a respective measurement beam (MS1, MS2) onto an assigned surface location and receiving radiation retroreflected by the surface location, and comprising a downstream evaluation device (AE) for determining the geometrical data on the basis of the radiation retroreflected by the surface locations, the probe arrangement (SA) with the probe outputs (1, 2, 3, 4, 5, 6) being designed in such a way that apart from the geometrical data of the surfaces, it is also possible at the same time to determine the relative position of the probe arrangement (SA) with the probe outputs (1, 2, 3, 4, 5, 6), positioned with a fixed mutual relationship, in relation to the at least one object, at least with regard to a plurality of relevant degrees of freedom, and the interferometric measurement system being designed to determine this relative position, the plurality of probe outputs (1, 2, 3, 4, 5, 6) being positioned in at least two normal measurement planes (ME1, ME2) spaced apart from one another with reference to an axis (AS) of the probe arrangement (SA), and at least three probe outputs (1, 2 or 3) being arranged in one measurement plane (ME1), and at least one probe output (4, 5, 6) being arranged in a further measurement plane (ME2).

2. Measurement system according to Claim 1,
**characterized in that** the probe outputs (1, 2, 3, 4, 5, 6) are distributed asymmetrically in at least one measurement plane (ME1, ME2).

3. Measurement system according to either of Claims 1 and 2, **characterized in that** probe outputs (1, 4) lying one above another in the direction (z) of an axis (AS) of the probe arrangement (SA) are combined to form a probe unit (a, b, c) which is connected to the beam feed section via an optical fibre (LF) and a connection point (i, ii, iii).

4. Measurement system according to one of the preceding claims, **characterized in that** it has an interferometric measuring device.

5. Measurement system according to Claim 4,
**characterized in that** the interferometric measurement device is designed as a white light interferometer and/or heterodyne interferometer.

6. Measurement system according to one of the preceding claims, **characterized in that** the evaluation device (AE) is designed for the parallel recording and evaluation of the radiation which is received by it via the probe outputs (1, 2, 3, 4, 5, 6) and their assigned measurement channels (MK1, MK2, MK3) and is retroreflected by the surface locations.

7. Measurement system according to Claim 6,
**characterized in that** the beam feed section has a broadband, short coherence light-generating unit (LQ) and a modulation interferometer (MI) which has interferometer arms (IA1, IA2) containing a plurality of different optical path lengths (I1, 12) and acoustic-optical modulators (AOM1, AOM2, AOM3), and **in that** the probe arrangement (SA) is assigned to a measuring interferometer in which optical path length differences which are imposed in the modulation interferometer (MI) and are greater than the coherence length of the short coherence light are cancelled out.

8. Measurement system according to Claim 7,
**characterized in that** more than two interferometer arms (IA1, IA2, IA3) or feed back loops formed in the interferometer arms are present in the modulation interferometer (MI) in order to produce different combinations of optical path differences and frequency shifts for different heterodyne frequencies.

9. Measurement system according to one of the preceding claims, **characterized by** the presence of a guide device which serves the relative adjustment of the object (BT) with reference to the probe arrangement (SA) and can be used to carry out relative adjustment in the direction of the axis (AS) and/or by rotation.

## Revendications

1. Système de mesure interférométrique optique pour acquérir des données géométriques de surfaces (0) d'au moins un objet (BT), comprenant une section d'acheminement de rayon, comprenant un arrangement de sonde (SA) raccordé à celle-ci, lequel présente plusieurs sorties de sonde (1, 2, 3, 4, 5, 6) pour délivrer un rayon de mesure (MS1, MS2) correspondant sur un point associé de la surface et pour enregistrer le rayonnement renvoyé par le point de la surface, et comprenant un dispositif d'analyse (AE) disposé en aval pour déterminer les données géométriques en se basant sur le rayonnement renvoyé par le point de la surface, l'arrangement de sonde (SA) muni des sorties de sonde (1, 2, 3, 4, 5, 6) étant configuré de telle sorte qu'en plus des données géométriques de la surface, il est en même temps également possible de déterminer la position relative de l'arrangement de sonde (SA), muni des sorties de sonde (1, 2, 3, 4, 5, 6) en relation de positionnement fixe les unes par rapport aux autres, par rapport à l'au moins un objet, au moins du point de vue de plusieurs degrés de liberté pertinents, et le système interférométrique étant conçu pour déterminer cette position relative, plusieurs sorties de sonde (1, 2, 3, 4, 5, 6) étant positionnées dans au moins deux plans de mesure (ME1, ME2) normaux espacés l'un de l'autre par rapport à un axe (AS) de l'arrangement de sonde (SA), et au moins trois sorties de sonde (1, 2, 3) étant disposées dans un plan de mesure (ME1) et au moins une sortie de sonde (4, 5, 6) étant disposée dans un autre plan de mesure (ME2).

2. Système de mesure selon la revendication 1, **caractérisé en ce que** les sorties de sonde (1, 2, 3, 4, 5, 6) sont distribuées de manière asymétrique dans l'au moins un plan de mesure (ME1, ME2).

3. Système de mesure selon l'une des revendications 1 ou 2, **caractérisé en ce que** dans la direction (z) d'un axe (AS) de l'arrangement de sonde (SA), les sorties de sonde (1, 4) disposées l'une au-dessus de l'autre sont regroupées en une unité de sonde (a, b, c) qui est raccordée à la section d'acheminement du rayon par le biais d'une fibre optique (LF) et d'un point de raccordement (i, ii, iii).

4. Système de mesure selon l'une des revendications précédentes, **caractérisé en ce qu'**il présente un dispositif de mesure interférométrique.

5. Système de mesure selon la revendication 4, **caractérisé en ce que** le dispositif de mesure interférométrique est réalisé sous la forme d'un interféromètre à lumière blanche et/ou d'un interféromètre hétérodyne.

6. Système de mesure selon l'une des revendications précédentes, **caractérisé en ce que** le dispositif d'analyse (AE) est configuré pour l'acquisition et l'analyse en parallèle du rayonnement renvoyé par les points de la surface et reçu par lui par les biais des sorties de sonde (1, 2, 3, 4, 5, 6) et des canaux de mesure (MK1, MK2, MK3) qui leur sont associés.

7. Système de mesure selon la revendication 6, **caractérisé en ce que** la section d'acheminement du rayon présente une unité de production de lumière (LQ) à large bande cohérente courte et un interféromètre à modulation (MI), qui possède plusieurs longueurs de voie optique (I1, 12) différentes et bras d'interféromètre (IA1, IA2) contenant des modulateurs acousto-optiques (AOM1, AOM2, AOM3) et **en ce qu'**à l'arrangement de sonde (SA) est associé un interféromètre de mesure dans lequel sont supprimées les différences de longueur de voie optique inscrites dans l'interféromètre à modulation (MI) qui sont supérieures à la longueur de cohérence de la lumière à cohérence courte.

8. Système de mesure selon la revendication 7, **caractérisé en ce que** l'interféromètre à modulation (MI) contient plus de deux bras d'interféromètre (IA1, IA2, IA3) ou boucles de contre-réaction formées dans les bras d'interféromètre pour générer différentes combinaisons de différences de voies optiques et décalages de fréquences pour différentes fréquences hétérodynes.

9. Système de mesure selon l'une des revendications précédentes, **caractérisé en ce qu'**il existe un dispositif de guidage pour le positionnement relatif de l'objet (BT) par rapport à l'arrangement de sonde (SA), lequel permet de réaliser un positionnement relatif en direction de l'axe (AS) et/ou par rotation.
